# EUROPEAN PATENT APPLICATION

(11) **EP 2 341 414 A1**
(43) Date of publication of application: **06.07.2011**
(21) Application number: 09252929.6
(22) Date of filing: 31.12.2009
(51) Int. Cl.: G06F 3/01, G06F 3/048

(54) **Portable electronic device and method of controlling a portable electronic device**

(71) Applicant: Sony Computer Entertainment Europe Limited, London W1F 7LP (GB)
(72) Inventor: Tilley, Stuart, London W1F 7LP (GB); Karp, Robert, London W1F 7LP (GB); McLaughlin, John Joseph, London W1F 7LP (GB)
(74) Representative: Turner, James Arthur

(57) **Abstract**

A portable electronic device comprising a display (200) arranged on a first side of the device (10). The display (200) has a first touch sensitive surface (200). The device comprises a second touch sensitive surface (310) separate from the display (200) and a processor responsive to a plurality of user control commands. The device further comprises a touch detector, responsive to a user touching at least one of the first touch sensitive surface (200) and the second touch sensitive surface (310), for detecting touch input regions (605,610,615,620,625) each corresponding to a respective one of the user control commands and for initiating a response, by the processor, to a user control command corresponding to a detected touch input region. The touch input regions (605,610,615,620,625) are assigned to corresponding user control commands so that at least a first subset (610,615,620,625) of the user control commands correspond to touch input regions on the first touch sensitive surface (200) and at least a second subset (605) of the user control commands correspond to touch input regions on the second touch sensitive surface (310).

## Description

The present invention relates to a portable electronic device and a method of controlling a portable electronic device.

A trend among current portable or pocketable electronic devices such as mobile phones, so-called 'smart-phones', music players, videogames and the like is to become both smaller and are provided with more features over time. This may be in the form of so-called 'convergence', where, for example, mobile phones now frequently incorporate still or video cameras, or where media players are also capable of playing some video games. Furthermore, the set of features provided for a particular type of device may increase as implementations of existing device features become more complex.

A consequence of this trend is that the user interface of the device itself may also become more complex to accommodate control of ever more features. A common approach has therefore been to adopt touch-screens, which have an advantage that controls for different functions are simply graphics to be displayed on the screen, and hence the physical size of the device no longer imposes a limit on the number of controls possible.

Typically, the user interacts with such a touch screen by holding the device in one hand and moving a finger of their other hand around the screen, tapping on icons or other controls displayed by the device to issue commands to it.

However, where there are many controls to be displayed and the screen size is small, a user may have difficulty in correctly activating a desired function, especially if the controls are displayed close together (for example spaced so as to be closer together than a width of the user's finger). Furthermore, the user's finger or hand may obscure some or all of the touch screen when they are trying to select a control.

The present invention seeks to alleviate or mitigate the above problems.

In a first aspect, there is provided a portable electronic device comprising: a display arranged on a first side of the device, the display having a first touch sensitive surface; a second touch sensitive surface separate from the display; a processor responsive to a plurality of user control commands; and a touch detector, responsive to a user touching at least one of the first touch sensitive surface and the second touch sensitive surface, for detecting touch input regions each corresponding to a respective one of the user control commands and for initiating a response, by the processor, to a user control command corresponding to a detected touch input region; in which the touch input regions are assigned to corresponding user control commands so that at least a first subset of the user control commands correspond to touch input regions on the first touch sensitive surface and at least a second subset of the user control commands correspond to touch input regions on the second touch sensitive surface.

In a second aspect, there is provided a method of controlling a portable electronic device comprising a display arranged on a first side of the device, the display having a first touch sensitive surface, a second touch sensitive surface separate from the display, and a processor responsive to a plurality of user control commands, the method comprising: detecting, in response to a user touching at least one of the first touch sensitive surface and the second touch sensitive surface, touch input regions each corresponding to a respective one of the user control commands; and initiating a response, by the processor, to a user control command corresponding to a detected touch input region; in which the touch input regions are assigned to corresponding user control commands so that at least a first subset of the user control commands corresponds to touch input regions on the first touch sensitive surface and at least a second subset of the user control commands corresponds to touch input regions on the second touch sensitive surface.

For example, a user control command could correspond to a sleep/wake function of the device, a text input function to the device, or any other suitable function of the device. Accordingly, where the user control command to be initiated corresponds to a user control command in the second subset, a user may cause the processor to initiate a response by touching the corresponding touch input region on the second touch sensitive surface without obscuring the display. Furthermore, a user could use the touch input regions corresponding to the user control commands of the first subset to enter text characters to the device and use the touch input regions corresponding to the user control commands of the second subset to perform other text operations such as "space" "return" (carriage return), "delete", "shift" and the like. Therefore, by distributing the user control commands between the first subset and second subset, control of the device such as text input can be speeded up. Additionally, icons to be displayed can be made bigger, enabling easier icon selection, because some functions can be controlled using the second touch sensitive surface.

Embodiments of the present invention will now be described by way of example with reference to the accompanying drawings, in which:
Figures 1A and 1B are schematic diagrams of a portable electronic device in accordance with an embodiment of the present invention;
Figure 2 is a schematic diagram of a portable electronic device in accordance with an embodiment of the present invention;
Figure 3 is a schematic diagram of a portable electronic device in accordance with an embodiment of the present invention;
Figure 4 is a schematic diagram of an example of a portable electronic device;
Figure 5 is a schematic diagram of a portable electronic device, including a front touch screen and a rear touch panel, for text entry in accordance with embodiments of the present invention;
Figures 6A and 6B are schematic diagrams of an upper and lower side respectively of a portable electronic device for text entry in accordance with embodiments of the present invention;
Figure 7 is a schematic diagram of a portable electronic device in accordance with embodiments of the present invention, in which the portable electronic device is controllable by a control motion; and
Figure 8 is a flow chart of a method of controlling a portable electronic device in accordance with embodiments of the present invention.

A portable electronic device and a method of controlling a portable electronic device are disclosed. In the following description, a number of specific details are presented in order to provide a thorough understanding of embodiments of the present invention. It will be apparent however to a person skilled in the art that these specific details need not be employed to practise the present invention. Conversely, specific details known to the person skilled in the art are omitted for the purposes of clarity in presenting the embodiments.

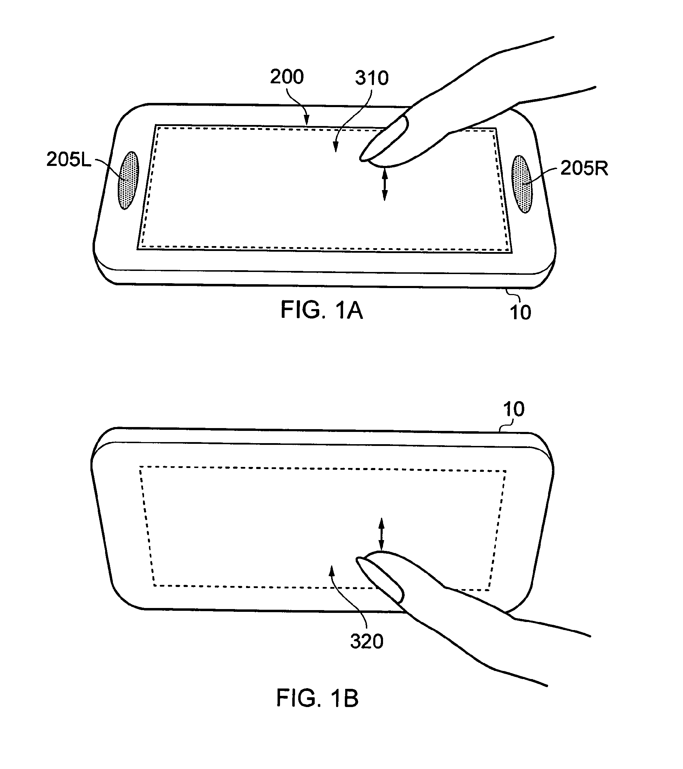

Figures 1A and 1B illustrate an embodiment of a portable electronic device (PED) 10. Figure 1A shows a notional front or top face of the PED, whilst Figure 1B shows a notional rear or bottom face of the PED. The front and rear faces are substantially parallel to one another.

On the front face, the PED comprises a display 200 and optionally one or more loudspeakers 205L, 205R. As described below, the display 200 has a touch sensitive surface.

On the rear side, the PED comprises a rear touch sensitive surface 320 (indicated by the dotted lines) having similar dimensions to the display 200. The rear touch sensitive surface is positioned so as to be substantially aligned with the display. That is to say, considered in a direction normal to the plane of the display, the rear touch sensitive surface substantially overlies the display.

A transparent front touch sensitive surface 310 (indicated by the dotted lines in Figure 1A) is also provided coincident with the display 200. The front and rear touch sensitive surfaces and the display thus have similar dimensions and placements on their respective faces of the device. The touch sensitive surfaces also have a similar resolution of touch localisation.

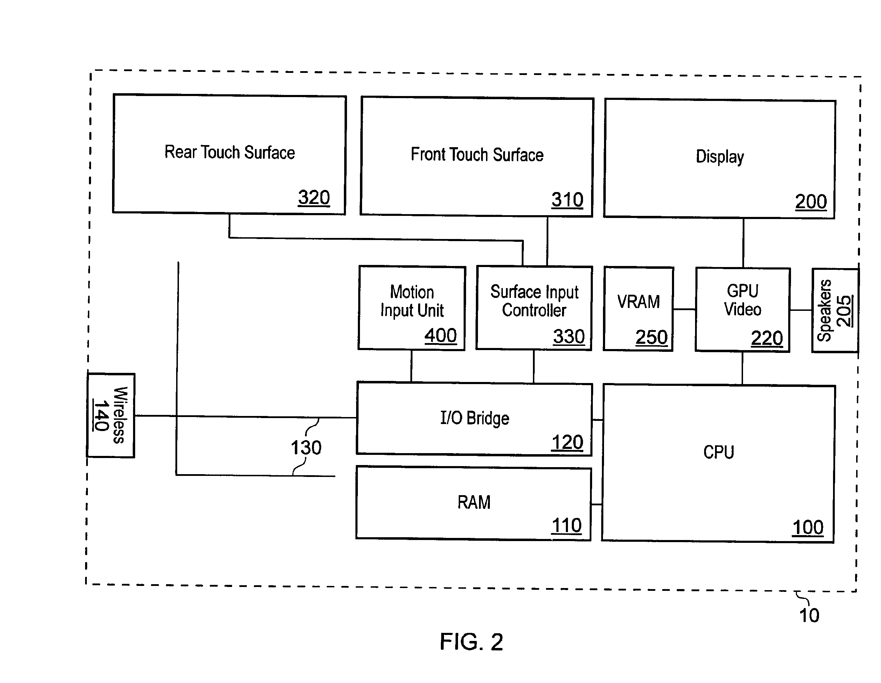

Referring now to Figure 2, an embodiment of the PED comprises a central processor (CPU) 100 coupled to random access memory (RAM) 110, and optionally to a read only memory (not shown). In addition the CPU communicates with a graphics processing unit (GPU) 220. The GPU has access to video RAM (VRAM) 250. The GPU outputs audio to loudspeakers 205L,R (only one shown for clarity) and/or to a headphone jack socket (not shown). The GPU also outputs video information to the display 200. The display is typically a liquid crystal display (LCD) but may be an organic light emitting diode display (OLED) or similar suitable display technology.

In addition, the CPU communicates with an input / output bridge (I/O bridge) 120 that co-ordinates communication with peripheral components both integral to and linkable with the PED. In an embodiment of the PED the I/O bridge communicates with a surface input controller 330, which parses inputs from the rear touch sensitive surface 320 and the transparent front touch sensitive surface 310. The I/O bridge also communicates with a motion input unit 400 comprising one or more micro electromechanical (MEMs) accelerometers and/or gyroscopes, to provide up to six axes of motion input (x, y and z axis lateral movement and roll, pitch and yaw rotational movement). The I/O bridge also communicates with a bus 130, upon which various peripheral devices may be linked, including one or more wireless communication units 140, such as for example WiFi and / or Bluetooth ® communication units.

It will be appreciated that the CPU 100 may be a single core or multi core processor. Similarly, the RAM may be dynamic RAM or may comprise both dynamic RAM and static (e.g. flash) RAM units. Likewise, whilst the GPU typically uses dedicated VRAM, alternatively or in addition it may share common RAM with the CPU. Finally, it will be appreciated that the function of the surface input controller 330 may be performed by the CPU itself.

The rear touch sensitive surface may be a conventional capacitance touchpad or panel such as that found in laptop computers or portable telephones. Such a touchpad typically comprises two layers of parallel conductive lines separated by an insulator and arranged at right angles to one another. A high frequency signal is swept through every respective pairing of lines between the two layers. The measurable current for each pair is then proportional to the capacitance at their point of intersection. When a user's finger is placed at or near that intersection, however, some of the electrical field between layers is shunted to ground, changing the effective capacitance and hence the measured current. Precise localisation of the user's finger can be achieved by measuring changes in capacitance at nearby points of intersection, which will be proportional to their respective distances from the finger. So-called multi-touch operation of the touchpad can be achieved by detecting distinct peaks in capacitance change at separate intersection points on the pad. Meanwhile, movement of a user's finger or fingers can be estimated from successive points of intersection where contact is detected.

A front touch sensitive surface for use with the display operates in a similar manner to the rear touch sensitive surface, but in this instance the conductive lines are typically transparent (as a non limiting example, being formed by a deposition of indium tin oxide), and the insulator between two layers is provided by all or part of the display window (e.g. a glass layer); typically a further transparent protective layer is then provided on top of the upper conductive layer.

It will be appreciated however that any suitable touch sensitive technique may be used for either touch panel.

It will also be appreciated that whilst not shown in the figures for the purposes of clarity, the PED comprises power distribution lines to various components and one or more sources of power, such as an input socket (for example a conventional DC power socket, or alternatively or in addition a USB socket). Such an input socket may also be used to charge one or more batteries (also not shown). Such batteries may be user removable or may be sealed in the device. Other components not shown include, for example, an optional microphone.

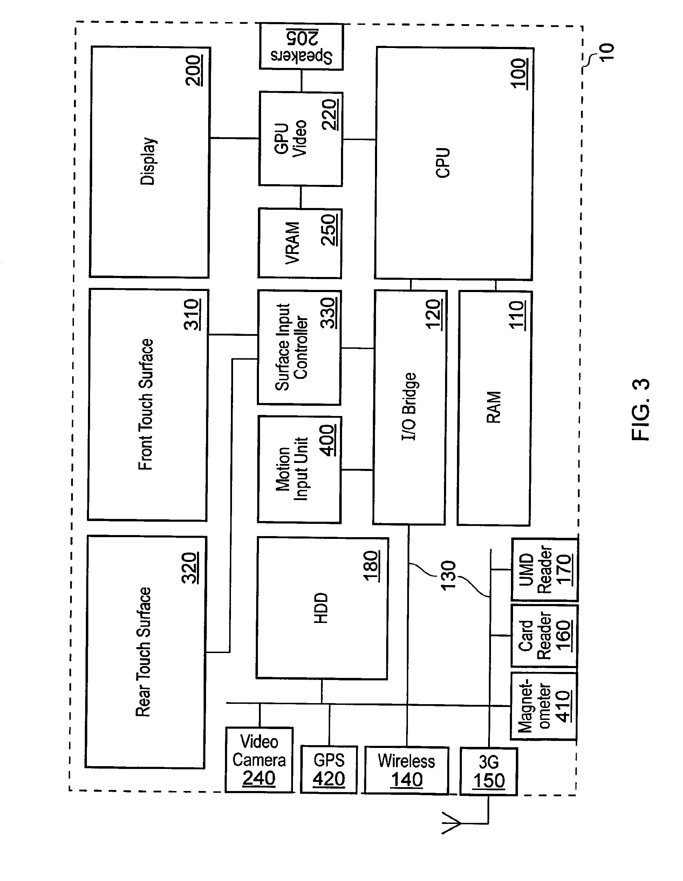

Referring now also to Figure 3, an embodiment of the PED may comprise one or more additional components, either integrated within the device or connectable to it. The additional components include, but are not limited to, the following.
a) A card reader 160 suitable for reading from and optionally writing to memory cards, such as a Sony ® Memory Stick ® card, or alternatively legacy memory cards such as those used by the Sony ® Playstation 2 ® entertainment device. Such a reader may be integral to the PED or may connect to the bus 130 via a USB connection.
b) A universal media disk (UMD) reader 170 or other optical disk reader (such as a DVD or Blu-Ray® disk reader), for accessing media and/or game content stored thereon. Such a reader may be removably connectable to the bus 130 via a USB or proprietary connection.
c) A magnetometer 410 for determining compass direction (i.e. the current absolute orientation of the PED), mounted integral to the PED either on the bus 130 or as part of the motion input unit 400.
d) A third generation (3G) or other mobile telephony module 150. in an embodiment, the module and aerial are integral to the PED, and optionally the aerial is shared with or otherwise coupled electromagnetically with other wireless units in the device for the purpose of transmission and reception. Alternatively the module may be removably connectable to the PED, for example via USB port or a Personal Computer Memory Card International Association (PCMCIA) slot.
e) A hard disk drive (HDD) 180 integral to the PED, providing bulk storage for audio /video media, downloaded games, and the like.
f) A GPS receiver 420. Again the GPS receiver may share an aerial with one or more other wireless units (such as WiFi) within the PED or may use its own aerial. Map information, where used, may be stored locally at the receiver, or in flash RAM of the PED, or on an HDD of the PED.
g) A video camera 240, typically comprising a charge coupled device (CCD) optical sensor and suitable optics for imaging onto the CCD. The resolution of the CCD may for example be 640x480 pixels, but may be any suitable resolution, such as for example 1920x1080 pixels (full HD). In an embodiment the video camera is integral to the PED, but alternatively may be removably connectable to the bus 130 via a USB or proprietary connection. An embodiment of the PED comprises two such video cameras 240, forming a stereoscopic pair.

In operation, the CPU accesses an operating system that is resident for example on a ROM, flash RAM or a hard disk. The operating system co-ordinates operation of the various functions of the PED and presents a user interface to a user of the device. The user interface will typically comprise graphical outputs via the display and touch based inputs, but may also include audio outputs and/or motion-based inputs.

The touch based inputs to the PED are peculiar to the arrangement of a display on the front of the PED and a correspondingly positioned touch sensitive surface (or 'panel') on the rear of the PED. This allows the user to treat the rear panel as a proxy for the display (in other words, address actions and inputs to the rear touch panel as if to the display, and/or point to the rear panel in order to point to the display). Thus for example, the user can point to icons or other displayed features from apparently underneath the display by touching the rear touch panel at the corresponding position.

It will be appreciated that unlike a laptop touch panel, the rear touch panel has a substantially 1:1 scale relationship with the screen, thereby not just enabling motion of a mouse pointer on screen that corresponds to motion of touch on the panel (for example), but furthermore also enabling direct placement of such a mouse on the screen at the position corresponding to the touch on the panel, because as noted above the panel can be understood to represent the screen (i.e. act as a proxy).

Because of the relative orientation of the display and the rear touch panel, left-to-right mapping across the rear touch panel is therefore reversed to correspond to the appropriate position on the display. Optionally this reversal is switchable depending on the orientation of the device as detected by the motion input unit, and/or according to what peripheral devices are connected; for example if the PED were connected to a television and then held display-down for use, the left-to-right mapping of the touch panel input may not be reversed.

Use of the rear touch panel as a proxy for the display advantageously allows interaction with the graphical output of the device without the user's hand or fingers obscuring the display or marking the display window.

In addition, the subjective experience of controlling the displayed interface from behind or underneath the screen allows for new modes of user interaction; for example selection, highlighting or magnification of a screen element may be achieved by a user pushing the element 'toward' them (i.e. with finger pressure on the rear panel) from behind the device. For a capacitance based touch panel, an increase in pressure on the rear panel (i.e. a push) can be detected by a flattening of the user's finger, which results in a larger covered area and hence more points of intersection in the panel having reduced capacitance. Conversely a reduction in pressure reduces the number of intersection points where touch is detected.

In conjunction with a similar but transparent front touch sensitive surface overlaid on the display, further modes of interaction become possible. For example, objects may be selected by being pinched between thumb and forefinger, with the thumb and forefinger touching the front and back touch panels respectively. The object may then be moved around, and, for example, activated by using a squeezing action between thumb and forefinger.

Further modes of interaction rely on the correspondence between position and / or motion of the user's fingers on the two touch panels. For example in a video playback application, stroking a finger across only the top touch panel may be interpreted as a fast-forward or rewind command (depending on direction), whilst a pinch hold followed by corresponding movement left or right of both fingers may be interpreted as selection of a specific point in playback (i.e. where the total playback time is scaled to the width of the touch panels). By contrast, however, a pinch hold followed by both fingers moving in opposite directions to each other may be interpreted as a twisting action, and adjusts a virtual volume dial. A similar grammar of interaction could be used for example for document or e-book navigation, with scrolling, page selection and zoom replacing the above playback functions.

So as to illustrate advantages provided by embodiments of the present invention, a brief description of a known portable electronic device will now be given in contrast to embodiments of the present invention.

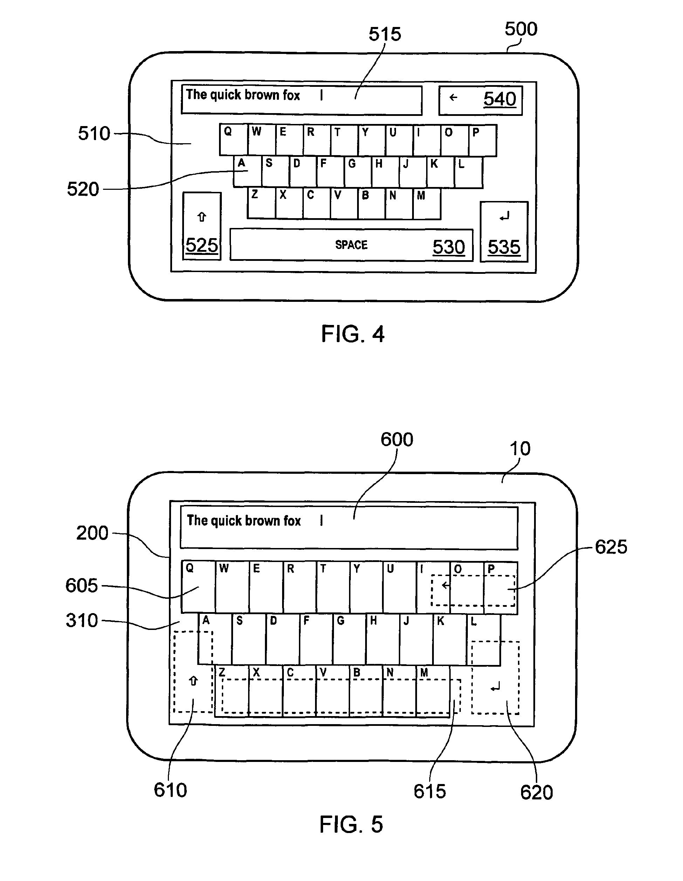

Figure 4 is a schematic diagram of an example of a known portable electronic device 500. The known portable electronic device 500 shown in Figure 4 comprises a touch screen 510 on a front side of the device 500. The touch screen comprises a text entry area 515 for displaying text entered by a user. The touch screen 510 comprises an alphanumeric function activation area 520 and non-alphanumeric character input function areas corresponding to Shift ( 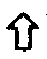 ) 525, Space 530, Return ( 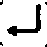 ) 535, and Backspace (←) 540.

Typically, to input text, a user would touch the touch screen at a position corresponding to a letter in the alphanumeric function activation area 520 or at a position corresponding to a non-alphanumeric input function area. The known device 500 would then cause the appropriate text to be displayed in the text entry area 515.

However, as text display and input control is carried out using the same touch screen on one side of the known device, the control areas may be so close together as to make it difficult for a user to touch a desired letter or control without touching another letter or control. Additionally, the user may inadvertently activate an undesired function or enter an incorrect letter. Furthermore, a user may be unable to see what they are typing because they may obscure some or all of the touch screen 510 during the action of typing.

An additional problem may occur when inputting text which requires the use of the Shift function area 525, for example when inputting capital letters. Typically, to mimic the functionality of a physical keyboard, such as a known QWERTY keyboard (where the letters are arranged on the keyboard in three rows with the letters at the left of the top row beginning Q, W, E, R, T, Y with the other letters arranged accordingly, for example in a similar manner to a typewriter) a user would hold down (press or touch) the Shift function area 525 together with another letter or number so as to input a symbol associated with that letter or number. However, as this necessitates touching two regions of the touch screen 510 at once, some considerable degree of dexterity on the part of the user may be required by the user for smooth or reliable text input. Therefore, this can slow down the text input process.

One way to overcome this problem would be to have some persistence associated with any function areas (such as Shift function area 525) which require substantially simultaneous input from another function activation region in order to activate a function, control, or other input. For example, the Shift function area 525 could remain activated for a set time after it was touched by a user, and deactivated following touch input at another function activation area, such as a letter in the alphanumeric function activation area 520. However, this can also slow down text input because a user may have to move their finger between two positions in order to input one character. In other words, a user may have to reposition their finger or thumb from a texting position in order to activate other functions, thus slowing down the input process. Here, a texting position is taken to mean a way in which the user is holding the device so as to input text to the device, for example by positioning their thumb above letters of the QWERTY keyboard.

Accordingly, as mentioned above, in embodiments, the portable electronic device 10 has a set of functions (user control commands) for operation by a user, for example text input functions, media player control functions, mobile telephone control functions and the like. However, it will be appreciated that the user control commands may comprise any suitable commands relating to any function of the device 10. The CPU 100 is responsive to the user control commands so as to control operation of the device 10.

The device 10 comprises the display screen 200 arranged on a first side (e.g. upper or front side) of the device 10. As mentioned above, the device 10 comprises a first touch sensitive surface (such as the front touch sensitive surface 310) arranged on the first side substantially to correspond with the display. In other words, the display has the first touch sensitive surface. The device also comprises a second touch sensitive surface (such as the rear touch sensitive surface 320) which is separate from the display 200.

In embodiments, the surface input controller 330 acts as or contributes to the operation of a touch detector, responsive to a user touching at least one of the first (e.g. front) touch sensitive surface and the second (e.g. rear) touch sensitive surface, for detecting touch input regions (function activation regions) each corresponding to a respective one of the user control commands. For example, a user could touch the rear touch sensitive surface 320 and the surface input controller 330 can detect a touch input region where the user touched the rear touch sensitive surface 320. In embodiments, the surface input controller 330 is operable to initiate a response, by the CPU 100, to a user control command corresponding to a detected touch input region. However, this functionality may be achieved in any suitable manner, for example by cooperation between the surface input controller 330, the I/O bridge 120 and the CPU 100.

The touch input regions are assigned to corresponding user control commands so that at least a first subset of the user control commands corresponds to touch input regions on the first touch sensitive surface and at least a second subset of the user control commands corresponds to touch input regions on the second touch sensitive surface. For example, user control commands corresponding to QWERTY text input (alphanumeric character input) can be input using the front touch sensitive surface 310 and non-alphanumeric text input (non-alphanumeric character input) can be input using the rear touch sensitive surface 320. This will be described in more detail later below.

In some embodiments, the second touch sensitive surface 320 is arranged on a second side (e.g. lower or rear side) of the device 10 substantially opposite the first side. The touch sensitive surface 320 comprises a function activation area associated with a function of the device 10 and the function activation area corresponds to a sub-region of the touch sensitive surface 320. For example, a function activation area or touch input region could correspond to a sleep/wake function of the device 10, a text input function to the device 10, or any other suitable function of the device 10. In embodiments, the reach touch surface 320, surface input controller 330, I/O bridge 120 and CPU 100 together act as a touch detector operable to detect user inputs and activate the function or user control command associated with the function activation area in response to user input (for example touch) at the function activation area. The CPU acts as a processor responsive to a plurality of user control commands. Accordingly, a user may activate a function associated with the function activation area without obscuring the display 200.

However, in other embodiments, the second touch sensitive surface can be positioned anywhere on the device 10 separate from the first touch sensitive surface (i.e. the one associated with the display). For example, the second touch sensitive surface can be positioned on a side of the device 10 other than the rear face. However, so as to facilitate easier operation of the second touch sensitive surface, in embodiments, the second touch sensitive surface is positioned on the second face (e.g. lower or rear face) of the device 10 so as to be substantially aligned with the display along a central axis normal to the display.

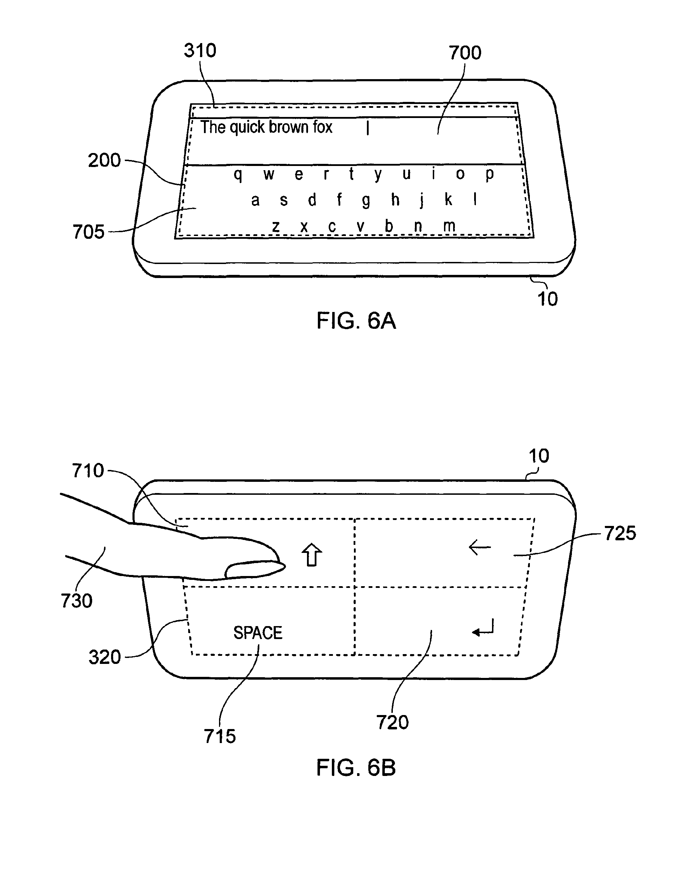

The functionality of the device 10 will now be described in more detail with reference to Figures 5, 6A and 6B.

Figure 5 is a schematic diagram of a portable electronic device of embodiments of the present invention, including a front touch screen and a rear touch panel, for text entry in accordance with embodiments of the present invention. In particular, Figure 5 shows the front side of the device 10 together with the display 200 and the front touch sensitive surface 310. The display 200 comprises a text entry region 600 for displaying text that a user has entered.

In embodiments, the front touch sensitive surface 310 comprises a first set of function activation areas 605 (touch input regions) associated with alphanumeric character input functions (alphanumeric user control commands) of the device. The display 200 is operable to display symbols associated with the input functions at positions on the display 200 which correspond to the respective positions of the function activation areas on the front touch sensitive surface 310.

In embodiments, the rear touch sensitive surface 320 comprises a second set of function activation areas (touch input regions) as indicated by the dashed lines in Figure 5. The second set of function activation areas of the rear touch sensitive surface 320 comprises function activation areas corresponding to Shift ( 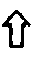 ) 610, Space 615, Return ( 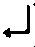 ) 620, and Backspace (←) 625. However, it will be appreciated that the set of function activation areas of the rear touch sensitive surface 320 could comprise one or more function activation areas. Furthermore, the function activation areas of the front touch sensitive surface 310 and the rear touch sensitive surface 320 could be associated with any suitable function (user control command) of the device 10. Shift () 610, Space 615, Return () 620, and Backspace (←) 625 can therefore be thought of a user control commands, with the second subset of user control commands comprising the user control commands Shift () 610, Space 615, Return () 620, and Backspace (←) 625.

In the embodiment shown in Figure 5, the first set of function activation areas 605 is associated with letters of the Roman (Latin) alphabet arranged in a QWERTY keyboard arrangement. Each letter is displayed on the display 200 so as to appear to the user at positions corresponding to the function activation areas 605 of the front touch sensitive surface. In Figure 5, each box surrounding a letter corresponds to the function activation area for that letter. However, any of the function activation areas of the first set may be associated with functions of the device 10 in any suitable manner. In embodiments, each letter corresponds to a user control command so that the CPU 100 causes an appropriate letter to be displayed on the display 200 or stored to the device 10 in response to the user touching the display 200 at an appropriate touch input region. In embodiments, the first subset of user control commands comprises the user control commands corresponding to text input (i.e. letters of the Roman alphabet)

Accordingly, in response to user input (e.g. touch) at a function activation area (touch input region) of the front touch sensitive surface 310 corresponding to a letter, the device 10 detects the touch input region corresponding to a letter and causes the display 200 to display that letter in the text entry region 600. However, it will be appreciated that the first set of function activation areas could comprise one or more function activation areas and that the function activation areas of the first set could be associated with any suitable function of the device 10. Furthermore, the user control commands of the first subset could be associated with any suitable function of the device 10.

In embodiments, the CPU 100 is operable to select, from a plurality of functions of the device 10, a function of the device to activate in response to user input at a function activation area associated with that function. The functions of the device 10 are associated with the function activation areas so as to be distributed between the function activation areas of the first set (e.g. the function activation areas 605) and the function activation areas of the second set (e.g. the function activation areas Shift () 610, Space 615, Return () 620, and Backspace (←) 625). More generally, in embodiments, the touch detector (including the touch input controller 330) initiates the CPU 100 to respond to a user control command corresponding to a detected touch input region, such as alphanumeric text input (QWERTY text input) or Shift () 610, Space 615, Return () 620, and Backspace (←) 625. But of course the control commands do not have to relate to text input operations.

In some embodiments, the plurality of functions (user control commands) comprise text input commands (functions) of the device 10. For example, functions such as alphanumeric text input and functions such as "shift", "return", "backspace", "tab", and "alt" typically found on a QWERTY keyboard can be distributed between the front and rear touch sensitive surfaces. Therefore, embodiments of the invention advantageously allow more of the front touch screen to be used for display of text input keys (as shown in Figure 5) than if a full keyboard were displayed (for example as illustrated in Figure 4) because some of the input can be carried out using the rear touch sensitive surface 320 as well as the front touch sensitive surface 310. As mentioned above, this is particularly important for smaller display sizes, as it allows individual keys to be larger. Accordingly, a user with large fingers or thumbs is less likely to accidentally press the wrong key.

More generally, in some embodiments, the user control commands of the first subset (those corresponding to touch input regions on the front touch sensitive surface 310) are associated with alphanumeric character input functions of the device 10 such as letters of a QWERTY keyboard as illustrated in Figure 5. In embodiments, the user control commands of the second subset (those corresponding to touch input regions on the rear touch sensitive surface 320) are associated with non-alphanumeric character input functions such as "shift", "return", "space" "backspace", "tab", and "alt" (for example as illustrated in Figure 5 by the dashed lines).

It will be appreciated that a user is unlikely to be able to see the rear touch sensitive surface 320 when the device 10 is held by the user in an appropriate manner for text entry. Therefore, in embodiments, operation of the rear touch sensitive surface is implemented so that the user can easily do it without looking. This will be described in more detail below with reference to Figures 6A and 6B.

Figures 6A and 6B are schematic diagrams of an upper and lower side respectively of a portable electronic device for text entry in accordance with embodiments of the present invention. Figure 6A shows the upper (front) side of the device 10 and Figure 6B shows the lower (rear) side of the device 10.

Referring to Figure 6A, the display 200 comprises a text entry region 700 and the front touch sensitive surface 310 comprises a function activation region 705 (touch input region). The device 10 is operable to display a keyboard layout on the display 200 of the device in a region corresponding to the function activation region 705. In the embodiment shown in Figure 6A, each letter of the keyboard layout corresponds to function activation area (touch input region) so that user input (e.g. touch) at that letter initiates that letter to be displayed in the text entry region 700.

Referring to Figure 6B, the rear touch sensitive surface 320 comprises a plurality of function activation areas (touch input regions) corresponding to "Shift" () 710, "Space" 715, "Return" () 720, and "Backspace" (←) 725. In other words, each function activation area of the rear touch sensitive surface 320 is a sub-region of the rear touch sensitive surface 320.

Furthermore, in the embodiment shown in Figure 6B, the function activation areas 710, 715, 720, and 725 are arranged on the rear touch sensitive 320 so as to fill the rear touch sensitive surface 320 thus maximising the area of the rear touch sensitive surface 320 that each function activation area 710, 715, 720, and 725 can occupy. This simplifies the input process for the user because each function activation area on the rear touch sensitive surface 320 can be as large as possible thus making it easier for a user to input a desired function even though they are unlikely to be able to see the rear (lower) side of the device 10.

For example, referring to Figure 6B a user is shown touching the function activation area 710 which corresponds to "Shift" with their finger 730. The user can then touch a letter in the function activation region 705 on the front touch sensitive surface 310 so as to cause the device 10 to display a capital letter in the text entry region 700.

In some embodiments, where the function activation areas of the front and rear touch sensitive surfaces relate to text input, the function activation areas need not be mapped to their conventional placement on a QWERTY keyboard. In some embodiments, the function activation areas (touch input regions) of the front and rear touch sensitive surfaces are positioned so as to be ergonomically convenient for a user to touch when holding the device 10, thus enabling easier operation.

Although text input has been described above, the distribution of functions of the device between the front touch sensitive surface and the rear touch sensitive surface can be used for other functions of the device such a media playback. For example, user control commands such as play and pause, fast forward, and rewind can be controlled using the front touch sensitive surface, with user control commands such as track change and volume control being controlled using the rear touch sensitive surface. In other words, more generally, functions of an application of the device 10 such as a media player, text input, mobile telephony, address book, calendar or any other suitable application, can be controlled by suitable input to function activation areas (touch input regions) of both the front touch sensitive surface and the rear touch sensitive surface, with the user control commands being distributed (split/divided) between the front and rear touch sensitive surfaces as appropriate. This speeds up input because a user can access more functions with reduced need to change a way in which they are holding the device 10.

Additionally, in embodiments, the input to the function activation areas (touch input regions) can be gesture based, multi-touch (as mentioned above) and the like. For example, control of volume of audio playback could be controlled using a sliding motion on either the front or rear touch sensitive surface. Other input to the touch sensitive surfaces can be used such as pinch input to both panels as described above. Furthermore, in some embodiments, the device 10 can detect one or more touch input regions (function activation areas) and initiate the CPU 100 to respond to the corresponding user control command(s) in an appropriate manner.

For example, substantially simultaneous detection of a touch input region (function activation area) corresponding to a user control command in the first subset and a touch input region (function activation area) corresponding to a user control command in the second subset could cause the device 10 to activate a user control command associated with both those user control commands. However, it will be appreciated that any number of function activations areas (touch input regions) could correspond with a user control command (function). In other words, more generally, the device 10 is operable to detect touch input regions (function activation areas) of at least one of the first touch sensitive surface and the second touch sensitive surface and initiate a one or more user control commands corresponding to those touch input regions.

To further assist the user in operating the function activation areas on the rear touch sensitive surface, in some embodiments, the device 10 comprises a feedback indicator generator operable to generate feedback to a user when the user is in physical contact with a touch input region (function activation area). This helps indicate a position on the front and/or rear touch sensitive surface which corresponds to a user control command.

In some embodiments, the CPU 100 is operable to cause the display 200 to display a symbol corresponding to a touch input region (function activation area) when the user is touching that touch input region (function activation area). In some embodiments, a user can lightly touch the rear touch sensitive surface 320 and move their finger around until the display indicates their finger is positioned so as to correspond to a desired user control command. For example, the device 10 could detect when the user's finger is lightly touching the function activation area 720 (corresponding to user control command "Return") and display the symbol for return (J) in an appropriate region on the display 200.

The user can then activate the function associated with the function activation area by pressing more firmly on the rear touch sensitive surface 320 at that position. In other embodiments, the CPU 10 is operable to cause one or both of the loudspeakers 205L and 205R to output a suitable noise when a user is in contact with a touch sensitive surface so that the position that the user is touching corresponds to a user control command. The user could then activate that user control command (function) by pressing more firmly on the rear touch sensitive surface 320. The device 10 is operable to detect the increased pressure provided by the user on the rear touch sensitive surface 320 as described above and activate the corresponding function.

However, a drawback of visual feedback is that a region of the display 200 will have to be used to display the feedback indicator, thus reducing the area available for displaying the function activation areas. Therefore, in some embodiments, the device 10 comprises a vibrational feedback generator operable to generate haptic feedback to the user when the user is in physical contact with a function activation area. When the user is in physical contact with a function activation area, for example, by lightly resting their finger on the rear touch sensitive surface 320, the CPU 100 can cause the vibrational feedback generator to cause the device 10 to vibrate. The user can thus tell that they are in contact with a function activation area.

In some embodiments, the device 10 comprises a vibrational feedback generator similar to those found in mobile phones for vibrational alert. In embodiments, the feedback generator is controlled by the CPU 100 via the I/O bridge 120. Vibrational feedback generators are known in the art and so will not be described here in detail.

So as to help enable a user to tell which function activation area they are touching, in embodiments, each user control command is associated with a respective haptic feedback pattern. For example, the function "Return" could have two short vibrational pulses associated with it, and the function "shift" could have one short vibrational pulse associated with it. However, any suitable haptic feedback generator such as a deformable touch surface may be used such as a piezoelectric surface which deforms in response to an applied electrical signal. Additionally, it will be appreciated that any or all of visual, audio and haptic feedback may be combined as appropriate.

In embodiments, the device 10 is operable to detect motion of the device 10 using the motion input unit 400. For example, the motion input unit 400 is operable to detect the device being shaken using known techniques and the CPU 100 can control the device 10 accordingly such as causing a change of audio track being played, a pause function in replay of media, bringing up and displaying a menu, a scroll function in a large document and the like. In other words, the device 10 is operable to detect, using the motion input unit 400, a control motion (e.g. shaking the device 10) which is associated with a control function of the device. In embodiments, the user control commands comprise a user motion control command associated with a control motion of the device which correspond to a predetermined movement of the device (e.g. shaking the device, rotating the device etc.). In embodiments the user control commands comprise a confirmation user control command associated with the user motion control command. The confirmation user control command corresponds to a respective touch input region.

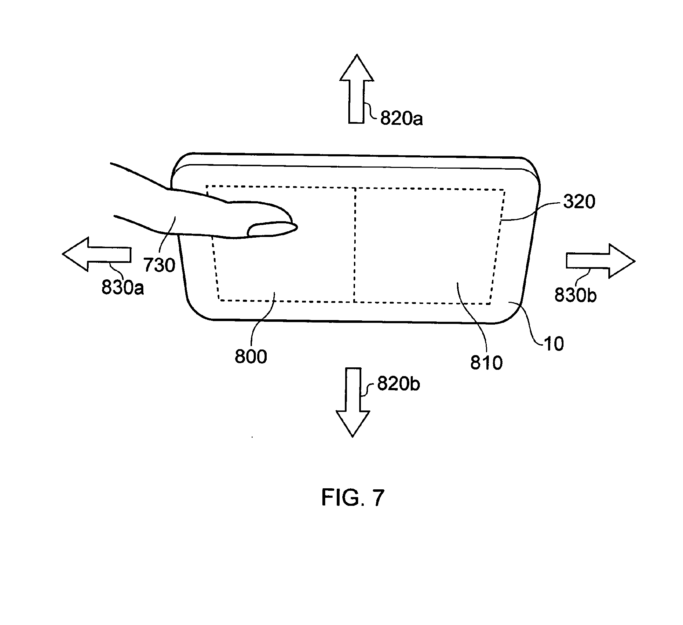

However, in order to prevent the control function being activated accidentally, for example by the device 10 being shaken in the user's pocket when the user is walking, in embodiments each control motion is associated with a respective user motion control command. The CPU 100 is operable to activate the function associated with the control motion in response to detection of the control motion by the motion input unit 400 if user input at the function activation area associated with the control motion occurs substantially simultaneously with the detection of the control motion. In other words, the CPU 100 is operable to initiate the user motion control command in response to detection of the control motion by the motion detecting means (e.g. motion control unit 400) if detection of the touch input region corresponding to the confirmation user control command occurs substantially simultaneously with the detection of the control motion. This will now be described in more detail with reference to Figure 7.

Figure 7 is a schematic diagram of a portable electronic device in accordance with embodiments of the present invention, in which the portable electronic device is controllable by a control motion. In particular, Figure 7 shows the rear (bottom) side of the device 10. In the embodiment shown in Figure 7, the rear touch sensitive surface 320 comprises a function activation area (touch input region) 800 and a function activation area (touch input region) 810. The function activation area 800 is associated with a first control motion corresponding to shaking the device 10 along an axis parallel to a shorter side of the device 10 as indicated by the arrows 820a and 820b (shaking the device vertically). The function activation area 810 is associated with a second control motion corresponding to shaking the device 10 along an axis parallel to a longer side of the device 10 as indicated by the arrows 830a and 830b (shaking the device horizontally). However, it will be appreciated that any suitable control motion could be used such as any or all of horizontal (x), vertical (y) and depth (z) displacement and pitch, yaw and roll.

For example, the first control motion could be associated with a user motion control command of changing between audio tracks and the second control motion could be associated with a user motion control command of pausing media playback. As shown in Figure 7, the user is touching the function activation area 800 with their finger 730. Accordingly, when the user shakes the device vertically in the direction of the arrows 820a and 820b (along an axis parallel to the shorter side) the device 10 will change between audio tracks during audio playback. However, if the user is not touching the function activation area 800 when vertical shaking occurs, playback will continue without the control function (user motion control command) associated with the first control motion being activated.

Similarly, the control function of pausing playback associated with the second control motion will not be activated if the user shakes the device horizontally (as indicated by the arrows 830a and 830b) unless the user is also touching the function activation area at substantially the same time that the device is being shaken horizontally. Accordingly, the likelihood that a control function (user motion control command) is accidentally activated in response to a control motion is reduced.

As another example, a tilting control motion such as tilting the device 10 along an axis parallel to a line of displayed text could cause the device to scroll through displayed pages of text. However, to reduce the likelihood of accidental activation, in embodiments, the tilting control motion could be associated with a respective function activation area (touch input region) on the front and/or rear touch sensitive surface. User input at the function activation area associated with the tilting control motion which corresponds with the occurrence of the control motion would thus cause the device 10 to scroll through the pages. However, a tilting control motion in the absence of any user input at the respective function activation area would not cause the device to scroll through the pages.

More generally, in embodiments, the control motion is associated with a respective function activation area, and the CPU 100 (control means) is operable to activate the function associated with the control motion in response to detection of the control motion by the motion detecting means if user input at the function activation area associated with the control motion occurs substantially simultaneously with the detection of the control motion.

In embodiments, the first set of function activation areas comprises the function activation area associated with a control motion (such as a control motion corresponding to motion as indicated by the arrows 830a and 803b) so that user input on the front touch sensitive surface which corresponds with detection of the control motion causes that function to be activated.

However, in other embodiments, the second set of function activation areas comprises the function activation area associated with a control motion (such as a control motion corresponding to motion as indicated by the arrows 830a and 803b) so that user input on the rear touch sensitive surface which corresponds with detection of the control motion causes that function to be activated. This has an advantage that a user need not obscure the display by touching it when trying to activate a function associated with a control motion.

In some embodiments, the device 10 is operable to respond to a plurality of different control motions each being associated with a respective user motion control command. The device 10 is operable to detect which control motion is being carried out by the user as mentioned above and activate the associated function (user motion control command) if user input at the corresponding touch input region (function activation area) is detected substantially simultaneously as the control motion. Accordingly, in some embodiments, the function activation areas associated with control motions are distributed (split) between the first set and the second set of function activation areas.

In some embodiments, the device 10 is operable to correlate user input to a function activation area (detection of a touch input region) with motion input as detected by the motion input unit 400. For example, the device 10 could detect a user tapping their finger on the device 10 using the motion input unit 400 using known techniques. If the device detects that the tap occurs at substantially the same time as user input to a function activation area (for example within a threshold period of time with respect to detection of user input at the function activation area), then the device 10 is operable to activate the function associated with that function activation area.

In other words, data from the motion input unit can be used to confirm whether a user meant to touch a function activation area (e.g. by substantially simultaneous detection of tapping the device). This helps reduce the likelihood of accidental activation of a function associated with a function activation area, for example by the user inadvertently touching the activation area whilst holding the device. It will be appreciated that input to a function activation area (detection of a touch input region) could be correlated with any suitable motion input (e.g. a tap, stroke, series of taps) as appropriate. Furthermore, it will be appreciated that any suitable threshold period of time may be used although preferably the threshold period of time is of the order of half a second (500 milliseconds (ms)).

More generally, in embodiments, the CPU 100 acts as user input detecting means operable to detect motion of the device and correlate detection of motion of the device with detection of user input at an input function activation area corresponding to a function activation area of the first set or second set so as to determine whether a function associated with that function activation area should be activated. In some embodiments, the control means is operable to activate the function associated with the input function activation area if the user input detecting means detects that motion of the device occurs within a threshold period of time with respect to user input at the input function activation area.

Although the above described embodiments have been described with respect to the roman (Latin) alphabet, it will be appreciated that other character sets such as Cyrillic, Arabic, Korean, Chinese, Japanese could be used, although any suitable character set could be used. Additionally, any other keyboard layout could be used. It is noted that in countries or languages where the QWERTY layout is used, it can differ in minor (and immaterial to the present embodiments) ways between countries. In some embodiments, the characters are distributed between the first set and the second set of function activation areas so that some of the characters are input using the rear touch sensitive surface 320 and some of the characters are input using the front touch sensitive surface 310. This is particularly advantageous where a character set has a large number of characters such as Chinese or Japanese.

For example, for entering Japanese characters into the device 10, a user could use a QWERTY keyboard layout such as the ones illustrated in Figures 5 or 6A on the front touch sensitive surface 310 to enter characters phonetically. Appropriate function activation areas (detection of touch input regions) on the rear touch sensitive surface 320 could then allow the user to select between different characters and/or sets of characters which are associated with the phonetic input. This speeds up character entry because a user does not have to move from a text entry position on the front touch sensitive surface (e.g. corresponding to the characters of the roman alphabet on a QWERTY keyboard) in order to select the word which they wish to input to the device 10.

Additionally, it will be appreciated that the front touch sensitive surface 310 does not necessarily have to be used or be present in the device 10. For example, the rear touch sensitive surface 320 could be used by itself to control the device 10, for example as described above with reference to Figure 7.

In some embodiments, the device is operable to display a set of icons for selection by the user on the display 200. A user may then select a icon using the front touch sensitive surface 310 by user input (e.g. touch) at a position corresponding to the icon. The device 10 is then operable to cause a set of options to be displayed extended along a side of the display 200. Each option is associated with a function activation area. The device 10 is operable to detect user input, for example, strokes or flicks on the rear touch sensitive surface 320, for example in function activation areas associated with the selected icon. A user can then select an option by user input at a function activation area corresponding to that option.

The device 10 could then cause the display 200 to display the options so that the user can cycle through (scroll through) the options. In some embodiments, options can be displayed on both, all, or any sides on the display 200. A user can select an option by user input at the appropriate function activation area and move their finger towards the centre of the screen to select that option. However, it will be appreciated that any suitable position for displaying the options and any suitable selection method could be used.

Additionally, it will be appreciated that the function activation areas (touch input regions) need not by statically defined with respect to the touch sensitive surfaces. For example, the position of a function activation area (touch input region) may be dynamically altered by the device 10 as appropriate. For example, a user could tap and drag a function activation area to a different position on the rear touch sensitive surface which they find easier to tap with their finger whilst holding the device. Therefore, the position of the function activation areas can be more ergonomically convenient for the user. In embodiments, such functionality is achieved with a suitable user setup interface, although any other suitable method could be used. Furthermore, in some embodiments, a user could hold the device in a particular way so as touch a combination of function activation areas of a dynamically defined function activation area so as to activate an associated function.

Additionally, it will be appreciated that the function activation areas may be any suitable shape or size as appropriate. Furthermore, the function activation areas may be dynamically defined by the device 10 as appropriate in accordance with a function or application that the device 10 is executing. For example, a media player may have different controls from those required for text input.

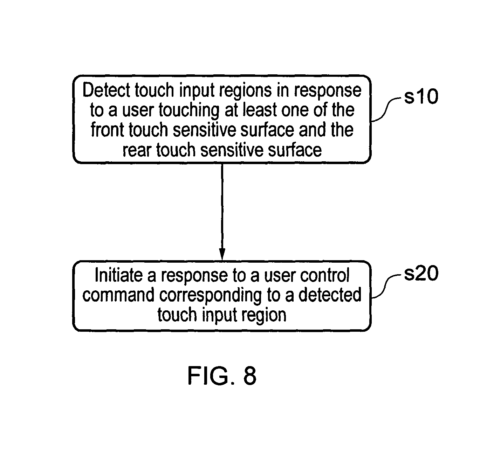

A method of controlling the portable electronic device will now be described with reference to Figure 8. Figure 8 is a flow chart of a method of controlling a portable electronic device in accordance with embodiments of the present invention. As mentioned above, the device 10 has a display 200 arranged on a first (front or upper) side of the device. The display has a first touch sensitive surface such as the front touch sensitive surface 310. Additionally, as mentioned above, the portable electronic device comprises a second touch sensitive surface separate from the display (for example the rear touch sensitive surface 320) and the CPU 100 (processor) is responsive to a plurality of user control commands.

At a step s10, the device 10 detects, in response to a user touching at least one of the first (e.g. front) touch sensitive surface and the second (e.g. rear) touch sensitive surface, touch input regions (function activation areas) each corresponding to a respective one of the user control commands (functions).

At a step s20, the device 10 initiates a response, by the processor (e.g. CPU 100), to a user control command corresponding to a detected touch input region. For example, the user control command corresponding to a detected touch input region could be to change between audio tracks, pause media playback, enter text, and any other suitable function or user control command of the device. As mentioned above, in embodiments, the touch input regions are assigned to corresponding user control commands so that at least a first subset of the user control commands corresponds to touch input regions on the first touch sensitive surface and at least a second subset of the user control commands corresponds to touch input regions on the second touch sensitive surface. In embodiments, the method includes any or all of the processes needed to achieve the functionality of the embodiments described above.

It is to be understood that, where function activation areas have been referred to, these can be considered to be touch input regions.

It will be appreciated that in embodiments of the present invention, elements of the above described method may be implemented in the entertainment device in any suitable manner. Thus the required adaptation to existing parts of a conventional equivalent device may be implemented in the form of a computer program product comprising processor implementable instructions stored on a data carrier such as a floppy disk, optical disk, hard disk, PROM, RAM, flash memory or any combination of these or other storage media, or transmitted via data signals on a network such as an Ethernet, a wireless network, the Internet, or any combination of these of other networks, or realised in hardware as an ASIC (application specific integrated circuit) or an FPGA (field programmable gate array) or other configurable or bespoke circuit suitable to use in adapting the conventional equivalent device.

In conclusion, although a variety of embodiments have been described herein, these are provided by way of example only, and many variations and modifications on such embodiments will be apparent to the skilled person and fall within the scope of the present invention, which is defined by the appended claims and their equivalents.

## Claims

1. A portable electronic device comprising:
a display arranged on a first side of the device, the display having a first touch sensitive surface;
a second touch sensitive surface separate from the display;
a processor responsive to a plurality of user control commands; and
a touch detector, responsive to a user touching at least one of the first touch sensitive surface and the second touch sensitive surface, for detecting touch input regions each corresponding to a respective one of the user control commands and for initiating a response, by the processor, to a user control command corresponding to a detected touch input region;
in which the touch input regions are assigned to corresponding user control commands so that at least a first subset of the user control commands correspond to touch input regions on the first touch sensitive surface and at least a second subset of the user control commands correspond to touch input regions on the second touch sensitive surface.

2. A device according to claim 1, in which the second touch sensitive surface is arranged on a second side of the device substantially opposite the first side.

3. A device according to claim 2, in which the second touch sensitive surface is positioned on the second side so as to be substantially aligned with the display so that in a direction normal to the plane of the display, the rear touch sensitive surface substantially overlies the display.

4. A device according to any one of the preceding claims, in which the user control commands comprise text input commands to the device.

5. A device according to claim 4, in which the first subset of user control commands comprises alphanumeric character input commands and the second subset of user control commands comprises non-alphanumeric character input commands.

6. A device according to any one of the preceding claims, comprising a feedback indicator generator operable to generate feedback to a user when the user is in physical contact with a touch input region.

7. A device according to claim 6, in which the feedback to the user is haptic feedback.

8. A device according to any one of the preceding claims, in which:
the user control commands comprise: a user motion control command associated with a control motion of the device which corresponds to a predetermined movement of the device performed by the user; and a confirmation user control command associated with the user motion control command, the confirmation user control command corresponding to a respective touch input region;
the device comprises motion detecting means operable to detect the control motion of the device; and
the processor is operable to initiate the user motion control command in response to detection of the control motion by the motion detecting means if detection of the touch input region corresponding to the confirmation user control command occurs substantially simultaneously with the detection of the control motion.

9. A device according to claim 8, in which the second subset of user control commands comprises the confirmation user control command.

10. A method of controlling a portable electronic device comprising a display arranged on a first side of the device, the display having a first touch sensitive surface, a second touch sensitive surface separate from the display, and a processor responsive to a plurality of user control commands, the method comprising:
detecting, in response to a user touching at least one of the first touch sensitive surface and the second touch sensitive surface, touch input regions each corresponding to a respective one of the user control commands; and
initiating a response, by the processor, to a user control command corresponding to a detected touch input region;
in which the touch input regions are assigned to corresponding user control commands so that at least a first subset of the user control commands corresponds to touch input regions on the first touch sensitive surface and at least a second subset of the user control commands corresponds to touch input regions on the second touch sensitive surface.

11. A computer program for implementing the method of claim 10.
